# EUROPEAN PATENT APPLICATION

(11) **EP 1 819 062 A1**
(43) Date of publication of application: **15.08.2007**
(21) Application number: 07101359.3
(22) Date of filing: 29.01.2007
(51) Int. Cl.: H04B 1/38

(54) **Method and device for cancelling interferences**

(30) Priority: 09.02.2006 FR 0650471
(71) Applicant: Thomson Licensing, 92100 Boulogne-Billancourt (FR)
(72) Inventor: Robert, Jean-Luc, 35830, Betton (FR); Le Naour, Jean-Yves, 35740, PACE (FR); Baron, François, 35235, THORIGNE-FOUILLARD (FR)
(74) Representative: Ruellan-Lemonnier, Brigitte

(57) **Abstract**

The invention is a device and a method for cancelling interferences between signals with frequency proximity, inherent to the co-location of multi-standard terminals (A1, A2, A3), in a communication system. The interfering signal is sampled either on the interfering signal (S2) or on the disturbed signal (S1) then phase shifted and attenuated according to the level of the disturbance (C/N info) and summed with the disturbed signal, so forming a neutralizing loop that can cancel the disturbance.

## Description

The present invention relates to a device and a method for cancelling the interferences inherent in the co-location of multi-standard terminals with frequency proximity in a communication system. It applies in particular within the framework of the implementation of the emerging DVB-H standard, the object of which is to allow the reception of digital television programmes by multi-standard mobile terminals such as future mobile phones, PDAs or other multimedia designs.

One of the most recent developments in the field of wireless communications is the trend towards the integration in a single terminal of multiple functions such as telephone, games console, personal digital assistant (PDA), digital camera, Internet browser, email, etc.

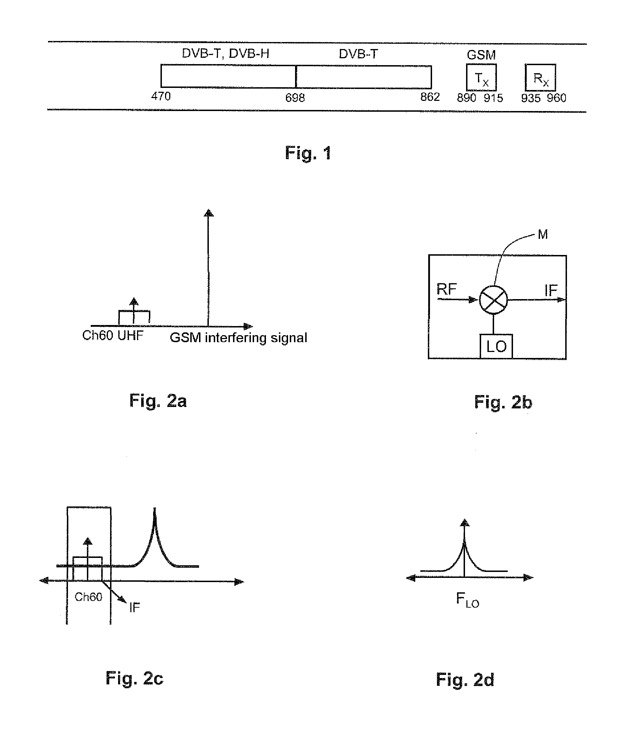

It therefore seems obvious that the orientation is towards the implementation of multi-standard terminals requiring the coexistence of applications such as multi-band cellular telephones for the GSM standard (900, 1800 and 1900 MHz), access to wireless local area networks WLAN at the 2.4 and 5 GHz frequencies, and digital television reception to the DVB-H standard for the mobile terminals or DVB-T standard for the fixed applications located in the UHF band (470-860 MHz). The frequency map represented by Figure 1 shows the frequencies of these different standards.

For each of these different modes, the terminal needs to be able to send and receive in compliance with the respective standards.

Now, in such a WLAN cellular/DVB-H/T multi-mode terminal, the leaks of the amplified signals sent to the other RF parts of the terminal can cause a notable degradation of the performance levels, in particular in the receive parts.

Serious RF filtering will make it possible to minimize the out-band noise of transmissions in the receive bands. These filtering arrangements are generally applied by filters with strong rejection of the SAW (Surface Acoustic Wave) or BAW (Bulk Acoustic Wave) type, but a major problem remains in this type of architecture associated with the frequency proximity of the 900 MHz GSM standard and the UHF band for Europe.

In practice, since the DVB-H (T) mode is a receive mode only, it remains entirely permeable to the strong interferences presented by the GSM 900 transmit channel located between 890 and 915 MHz.

The cellular phones to the GSM standard are capable of delivering a power of 33 dBm or 2 W. Nevertheless, statistical studies show that the average transmit power is located more towards 20 dBm, and also in a near environment (at approximately 1 m), a digital receiver is potentially in the presence of an interference of the order of -10 dBm and therefore strong compared to the sensitivity of the receiver located towards -80 dBm. Various rejection devices are known from the state of the art such as a "notch filter" type rejection device, but it is not selective enough to allow for an effective immunity of the band above the UHF band with respect to the GSM transmissions from the terminal.

The invention seeks to remedy this problem, more particularly for the DVB-T receivers which can be located in a cellular telephone environment and, naturally, more particularly if the reception is located in the area above the UHF spectrum.

The invention consists of a method of cancelling interferences between signals with frequency proximity, inherent to the co-location of multi-standard terminals, in a communication system. It comprises the steps of taking a sample of, by coupling, an interfering signal emitted towards a first terminal, then forming a loop for neutralizing this signal on the disturbed signal received by one of the second terminals according to an indication signifying the disturbance level due to this interfering signal.

Such a design makes it possible to obtain a dynamic rejection that is very effective and superior to a passive rejecting filter device.

Preferably, the indication signifying the disturbance level is deduced from the carrier-to-noise component C/N of the disturbed signal sampled at the output of the demodulator of the subsystem receiving this signal.

The step for taking a sample of the interfering signal by coupling is preferably carried out on the interfering signal emitted by the first terminal. According to a variant of the method according to the invention, the step for taking a sample of the interfering signal by coupling is carried out on the disturbed signal received by one of the second terminals, then by isolating the interfering signal by filtering.

Preferably, the step for forming a neutralizing loop begins with a phase-shifting step via a circuit for delaying the sampled signal to obtain a signal in phase opposition, followed by a step for attenuating the phase-shifted signal.

The invention also consists of a device for cancelling interferences between signals with frequency proximity, inherent to the co-location of multi-standard terminals in a communication system, and which comprises a coupling element for taking a sample of a signal, emitted towards a first terminal, that is the source of interferences on a signal received by one of the other terminals, and elements forming a neutralizing loop on the received signal from the intereference-source signal, the loop being controlled by a signal indicating the disturbance level due to this interfering signal.

Preferably, the neutralizing loop comprises a delay element for phase shifting the sampled signal, an attenuator, voltage-controlled by the signal indicating the disturbance level to attenuate the level of the phase-shifted interfering signal and a summer for adding together the phase-shifted and attenuated interfering signal and the received signal disturbed by the interference.

Similarly, preferably, the signal indicating the disturbance is a digital signal converted to analogue form by a converter element and amplified by an amplifier, dependent on the signal representing the signal-to-noise ratio delivered by the demodulator of the subsystem receiving the received signal.

Preferably, the interfering signal originates from signals emitted in the GSM band and the received signal is in the UHF band.

The innovative device proposed here allows for the use of the DVB-H standard over the entire UHF band for the cellular/DVB-H multi-band terminals. Furthermore, it allows for the use of DVB-T receivers in a 900 MHz GSM environment.

The characteristics and advantages of the invention mentioned above, and others, will become more clearly apparent from reading the description that follows, given in relation to the appended drawings, in which:
- Figure 1, already described, represents a frequency map of the DVB-T (H) - GSM 900 MHz standards;
- Figures 2a, 2b, 2c and 2d represent the phenomenon of reciprocal interference;
- Figure 3 represents an architecture of the proposed design and,
- Figure 4 represents another architecture of the proposed design.

The undesirable effects provoked by disturbances due to the GSM signals on a cellular terminal will be explained using Figures 2a, 2b, 2c and 2d.

In practice, there is considered a conventional receiver frequency conversion stage as represented in Figure 2b, mainly comprising a mixer M and a local oscillator LO of frequency F_{LO} used to convert the RF input signal into an intermediate frequency IF signal. The RF input signal represented by Figure 2a is made up of a UHF signal from the selected channel Ch60, for example 60, and of an amplitude less than that of the GSM interfering signal. The curve representing the noise of the local oscillator LO is represented in the Figure 2d. The reciprocal interference phenomenon, or "reciprocal mixing", appears when the noise side-bands of the local oscillator about the frequency F_{LO} are mixed with an interference deriving from a strong disturber, close to the signal to be received. There follows a degradation of the sensitivity of the receivers in the presence of this strong disturber. As a consequence, and as the representation of the thermal noise of Figure 2c shows, the noise floor of the intermediate frequency IF signal of the selected channel Ch60 is increased and, because of this, the carrier-to-noise ratio C/N at the input of the demodulation circuit is automatically degraded, so resulting in a loss of sensitivity of the receiver. At this level of the receive subsystem, this additional noise in the wanted channel, for example 60, cannot be filtered because it is located in the selected channel.

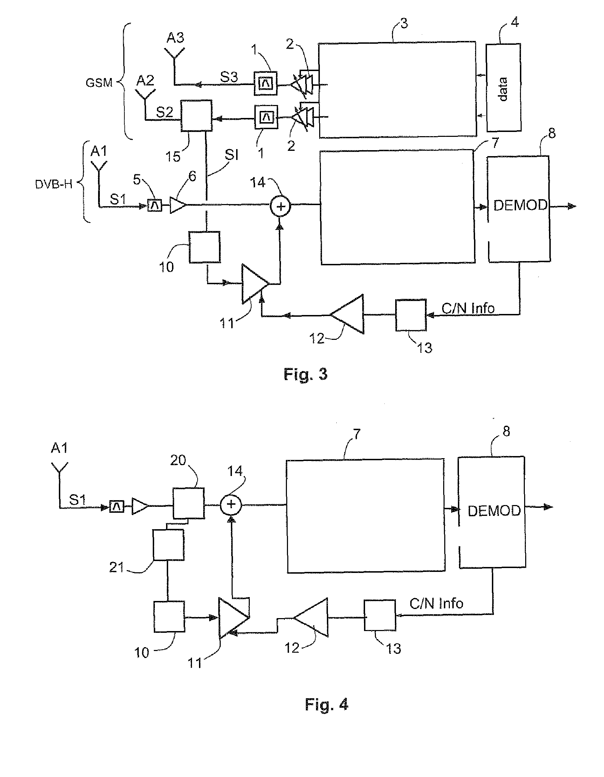

Figure 3 represents an architecture of the proposed design. A GSM transmitter and a DVB-H receiver of a multi-standard terminal are represented. They have GSM antennas A2, A3 and a UHF antenna A1, virtually co-located. The signals S2, S3 delivered to the GSM antennas A2, A3 have a strong power dynamic range and the signal S2 transmitted in the 890-915 MHz frequency band will interfere with the signal S1 received by the UHF antenna A1. The GSM signals delivered to the antenna can, for example, reach 2W or 33 dBm compared to the sensitivity of the DVB-T(H) receiver of the order of -80 dBm (in 64QAM modulation). An overall isolation associated simultaneously with the filtering and the decoupling between antennas greater than 110 dB would therefore be necessary.

The situation then applies of the conditions described previously concerning a strong interference from the signal S2 on the signal S1, likely to generate the "reciprocal mixing" phenomenon, the increasing of the noise floor then resulting in a substantial degradation of the carrier-to-noise ratio C/N.

The GSM signals S2, S3 transmitted by the antennas A2 and A3 in the 890-915 MHz and 1800-1900 MHz frequency bands originate from a conventional transmit subsystem, the elements of which corresponding to the filters 1, amplifiers 2, RF signal receive circuit 3 and baseband signal processor 4 are diagrammatically represented. Their functions are known to those skilled in the art and will not be explained.

Similarly, the DVB-H signal is received by the UHF antenna A1 and a conventional receive subsystem include, among other things, associated with filters 5 and low-noise amplifiers LNA 6, a tuner element 7 and a demodulation element 8, for example an OFDM (Orthogonal Frequency Division Multiplexing) demodulator and will enable the signal received by the antenna A1 to be demodulated. This demodulated signal is, for example, a signal compliant with the "MPEG 2 TS" standard. An indication concerning the signal-to-noise ratio C/N info of the demodulated signal is available at the output of the demodulator.

The device according to the invention proposes the formation of a loop for neutralizing the interference produced by the GSM signal on the UHF signal controlled from the signal-to-noise ratio indication C/N info generated by the OFDM demodulator. A portion of the GSM transmit signal in the 890-915 MHz band is sampled directly at the transmit output via a "20 dB coupler" 15, for example. This signal is then delayed to introduce a 180° phase shift by a delay circuit 10, typically formed by a length of microstrip line or by a passive phase shifter. The delay is calibrated so as to additionally compensate for the delay of the GSM signal associated with the physical distance between antennas and with the passage of the interference in the UHF filtering and low noise amplification circuits. This phase-shifted signal is applied to the input of an attenuator 11, voltage-controlled by a signal signifying the degradation of the signal which is, for example, generated by the digital indication representing the signal-to-noise ratio C/N info obtained from the demodulator 8. It could be generated by any other indications related to the degradation appearing following these interferences sampled on the demodulator such as the error rates or on the tuner such as the level of the signal on an adjacent or non-adjacent channel or any other level where this degradation of the signal could be observed. This digital indication signal C/N info is converted into an analogue signal by a digital-analogue converter DAC 13 then amplified by the amplifier 12 before being applied to the voltage-control input of the attenuator 11. The attenuation of the delayed signal is therefore regulated by the indication concerning the noise due to the "reciprocal mixing" described using Figure 2.

A summer 14 sums the signals obtained on the one hand from the voltage-controlled attenuator 11 and the signal obtained from the DVB-T(H) receive subsystem on the other hand, after the low-noise amplification (LNA) stage 6 and therefore makes it possible to reduce the disturbance due to the interfering signals.

Based on the device according to the invention described previously, the method according to the invention consists, on the appearance of the GSM interference on the UHF signal, in a first phase, in summing in phase opposition the signal S2 sampled on the 900 MHz transmit subsystem and the UHF signal including the interferences due to this GSM signal. This summing is applied with any relative amplitude.

Then, in a second phase, the OFDM demodulator 8 detects the degradation of the signal-to-noise ratio C/N and delivers an indication on this measured signal-to-noise ratio C/N which drives the variable attenuator 11 inserted in the neutralizing loop and so manages the amplitude of the attenuator 11 to minimize the interference on the summer 14 by a summing of equal amplitude and in phase opposition, and so makes it possible to optimize the performance criterion of the signal-to-noise ratio C/N at the demodulator output.

In the absence of GSM 900 cellular transmission, only a noise contribution is summed with the UHF signal, but the presence of the attenuator 11 makes this contribution negligible and, because of this, does not affect the performance levels in terms of signal-to-noise ratio of the DVB-T(H) channel.

Figure 4 illustrates another embodiment of the device according to the invention and is more particularly applicable to a DVB-T/H receiver. This device, similar to the device described by Figure 3 and which also operates based on reducing the interfering signal using a neutralizing loop, is distinguished by the taking a sample of of the interfering signal which is done on the disturbed signal via a coupler 20 associated with a very selective filter 21 - for example of SAW type. The duly isolated interfering signal is, as in the embodiment of Figure 3, phase-shifted by 180° by a delay circuit 10. The phase-shifted signal is then attenuated by the attenuator 11, voltage-controlled by a signal corresponding to the signal-to-noise ratio, C/N info, obtained from the demodulator, then summed by the summer 14 with the input UHF signal, so as to reduce the influence of the disturbance due to the GSM interfering signals. The neutralizing loop therefore remains the same as in the design described previously.

This design makes it possible to extend the use of the DVB-H standard that is currently limited to 700 MHz, to any frequencies of the UHF band. It furthermore allows the use of a DVB-T(H) receiver in a GSM environment for geographic areas having multiplexes in the part above the UHF spectrum and which could not hitherto be considered.

In the context of the implementation of multi-standard terminals combining 900 MHz GSM type cellular applications and digital terrestrial reception to the DVB-T and H standards for mobile, it makes it possible to avoid a notable degradation of the sensitivity of the DVB-T (H) receiver provoked by the frequency proximity of the two applications and in particular by the presence of a strong GSM interference in the UHF channel.

## Claims

1. Method of cancelling interferences between signals with frequency proximity, inherent to the co-location of multi-standard terminals (A1, A2, A3), in a communication system, **characterized in that** the method comprises the steps of:
taking a sample, by coupling, of an interfering signal emitted towards a first terminal (A2), and
forming a loop for neutralizing this signal on the disturbed signal (S1), received by one of the second terminals (A1) according to an indication signifying the disturbance level due to this interfering signal.

2. Method of cancelling interferences according to Claim 1, **characterized in that** the indication representing the disturbance level is deduced from the carrier-to-noise component (C/N info) of the disturbed signal at the output of the demodulator (8) of the subsystem receiving this signal.

3. Method of cancelling interferences according to Claim 1, **characterized in that** the step for taking a sample of the interfering signal by coupling is carried out on the interfering signal emitted by the first terminal.

4. Method of cancelling interferences according to Claim 1, **characterized in that** the step for taking a sample of the interfering signal by coupling is carried out on the disturbed signal received by one of the second terminals, then by isolating the interfering signal by filtering.

5. Method of cancelling interferences according to Claim 1, **characterized in that** the step for forming a neutralizing loop begins with a phase-shifting step via a circuit (10) delaying the sampled signal to obtain a signal in phase opposition, followed by a step for attenuating the phase-shifted signal.

6. Device for cancelling interferences between signals with frequency proximity, inherent to the co-location of multi-standard terminals in a communication system, **characterized in that** it comprises:
a coupling element (15, 20) for taking a sample of a signal (S2), emitted towards a first terminal, that is the source of interferences on a signal received by one of the other terminals (A1);
elements (21, 10, 11, 14) forming a neutralizing loop on the received signal (S1) from the interference-source signal (S2), the loop being controlled by a signal indicating the disturbance level due to this interfering signal.

7. Device for cancelling interferences according to Claim 6, **characterized in that** the neutralizing loop comprises a delay element (10) for phase shifting the sampled signal, an attenuator (11), voltage-controlled by the signal indicating the disturbance level to attenuate the level of the phase-shifted interfering signal and a summer (14) for adding together the phase-shifted and attenuated interfering signal and the received signal disturbed by the interference.

8. Device for cancelling interferences according to Claim 6, **characterized in that** the signal indicating the disturbance level is a digital signal, converted to analogue form by a converter element (13) and amplified by an amplifier (12), dependent on the signal (C/N info) representing the signal-to-noise ratio delivered by the demodulator of the subsystem receiving the received signal.

9. Device for cancelling interferences according to Claim 6, **characterized in that** the interfering signal originates from signals (S2) emitted in the GSM band.

10. Device for cancelling interferences according to Claim 6, **characterized in that** the received signal (S1) is in the UHF band.
